# EUROPEAN PATENT SPECIFICATION

(11) **EP 4 483 696 B1**
(45) Date of publication and mention of the grant of the patent: **06.08.2025**
(21) Application number: 24170380.0
(22) Date of filing: 16.04.2024
(51) Int. Cl.: A01D 34/68, A01D 34/78, A01D 34/90

(54) **LAWN EDGER**
RASENKANTENSCHNEIDER
MACHINE À CARRETER POUR GAZON

(30) Priority: 29.06.2023 CN 202310788963; 29.06.2023 CN 202321686991 U
(43) Date of publication of application: 01.01.2025
(73) Proprietor: Nanjing Chervon Industry Co., Ltd., Nanjing, Jiangsu 211106 (CN)
(72) Inventor: ZHAO, Miaosong, Nanjing (CN); GUO, Jianpeng, Nanjing (CN)
(74) Representative: Sun, Yiming

(56) References cited:
- CN-A- 116 133 516
- US-A1- 2008 092 398
- US-A1- 2012 180 445
- US-A1- 2015 034 349
- US-A1- 2020 236 848
- US-A1- 2023 112 033
- US-E- R E48 068

## Description

### TECHNICAL FIELD

The present application relates to the technical field of power tools and, in particular, to a lawn edger and a power tool.

### BACKGROUND

In the related art (see for example US 2023/112033), a lawn edger, as a common garden tool, generally includes a long rod assembly for a user to operate, one end of the long rod assembly is connected to a working head, and the other end of the long rod assembly is connected to an operation assembly convenient for the user to operate. The lawn edger has relatively low overall performance. To improve the performance on this basis, the whole machine is required to be bigger and heavier. As a result, the machine is heavier and difficult to handle, and the user needs to move the machine forcefully for use and easily becomes fatigued during operation.

This part provides background information related to the present application, which is not necessarily the existing art.

### SUMMARY

The present application aims to solve or at least alleviate part or all of the preceding problems. Therefore, an object of the present application is to provide a lawn edger and a power tool.

To achieve the preceding object, the present application provides a lawn edger according to claim 1. Preferred embodiments are provided in the dependent claims.

The present application has the following benefits: the electric motor drives the output shaft to rotate and thus can drive the blade to rotate, implementing a grass cutting function; when the electric motor is in the maximum-efficiency state, the ratio of the output power of the electric motor to the weight of the lawn edger is greater than or equal to 180 W/kg, which indicates that the electric motor has relatively large output power, a relatively small mass, and a relatively high power density so that machine performance is improved and the whole machine is kept in a relatively light state, thereby facilitating user operation.

### BRIEF DESCRIPTION OF DRAWINGS

FIG. 1 is a structural view of a lawn edger according to the present application;
FIG. 2 is a partial structural view one of a lawn edger according to the present application;
FIG. 3 is a side view of a lawn edger according to the present application;
FIG. 4 is a partial structural view two of a lawn edger according to the present application;
FIG. 5 is a partial structural view three of a lawn edger according to the present application;
FIG. 6 is a partial structural view of a connection assembly according to the present application;
FIG. 7 is a partial sectional view of a connection assembly according to the present application;
FIG. 8 is a partial enlarged view of FIG. 7;
FIG. 9 is a circuit block diagram of a lawn edger according to the present application;
FIG. 10 is a partial structural view four of a lawn edger according to the present application;
FIG. 11 is an enlarged view of part A in FIG. 10;
FIG. 12 is a partial structural view five of a lawn edger according to the present application;
FIG. 13 is a partial structural view six of a lawn edger according to the present application;
FIG. 14 is a characteristic graph of an electric motor according to the present application; and
FIG. 15 is a structural view of another lawn edger according to the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

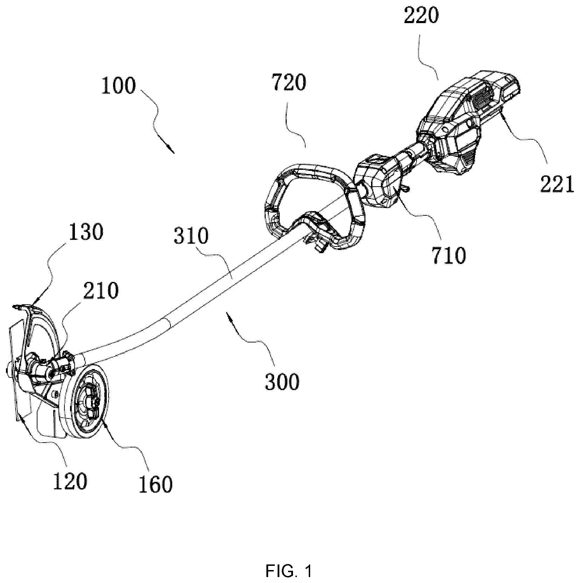

Referring to FIG. 1, the present application provides a power tool 100, which is a mechanical tool for trimming a lawn, vegetation, or the like. The power tool may be a long-rod edger. An example in which the power tool 100 is a lawn edger is used for description.

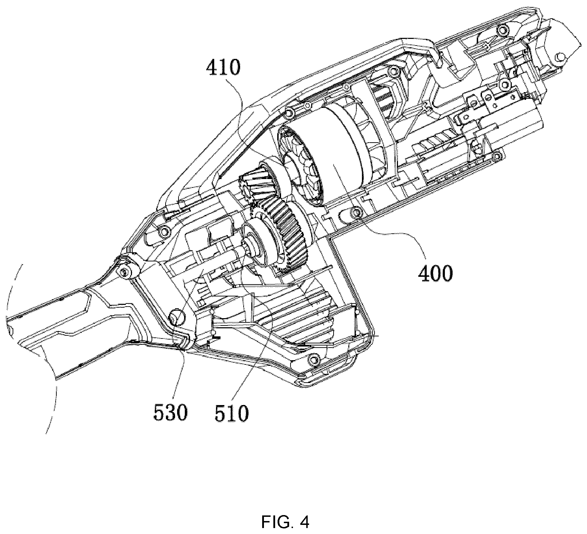

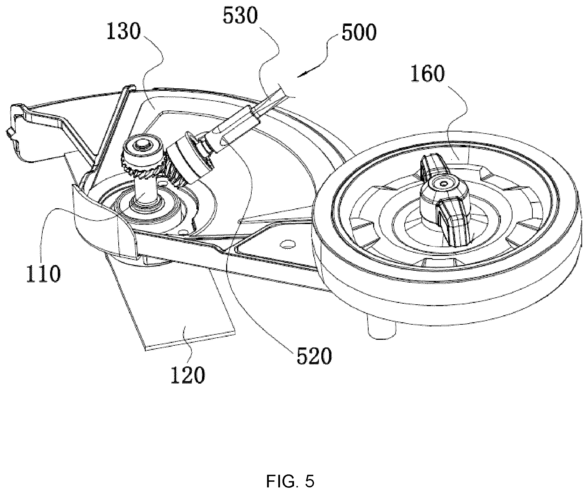

Referring to FIGS. 1 to 5, the lawn edger includes an output shaft 110, a front housing 210, a rear housing 220, a connection assembly 300, an electric motor 400, and a transmission assembly 500. The output shaft 110 is used for mounting a blade 120 for cutting grass, the front housing 210 accommodates at least part of the output shaft 110, the rear housing 220 is formed with a coupling portion 221 for coupling a battery pack 600, the connection assembly 300 is used for connecting the front housing 210 to the rear housing 220, and the electric motor 400 is mounted in the rear housing 220. The transmission assembly 500 is used for transmitting power between the electric motor 400 and the output shaft 110 so that the electric motor 400 can drive the output shaft 110 to rotate and thus make the blade 120 rotate to implement cutting.

In some examples, the connection assembly 300 includes a connection tube 310, the connection tube 310 is used for connecting the front housing 210 to the rear housing 220, the transmission assembly 500 includes a drive shaft that is at least partially disposed in the connection tube 310, and the connection tube 310 protects the drive shaft.

In some other examples, the connection assembly 300 includes the connection tube 310, and the connection tube 310 is used for connecting the front housing 210 to the rear housing 220. The transmission assembly 500 includes a first drive shaft 510, a second drive shaft 520, and a connection shaft 530, the first drive shaft 510 is connected to the electric motor 400 and disposed at the rear end of the connection tube 310, the second drive shaft 520 is used for driving the output shaft 110, the connection shaft 530 connects the first drive shaft 510 to the second drive shaft 520, and at least part of the connection shaft 530 is disposed in the connection tube 310.

The first drive shaft 510 and the electric motor 400 are connected through a gear mechanism, a first gear is disposed on a motor shaft 410 of the electric motor 400, a second gear is disposed on the first drive shaft 510, and the first gear meshes with the second gear. The first gear and the second gear may be spur gears. The first drive shaft 510 and the connection shaft 530 are connected through a first joint, and the second drive shaft 520 and the connection shaft 530 are connected through a second joint. The second drive shaft 520 and the output shaft 110 are connected through a gear mechanism, a third gear is disposed on the second drive shaft 520, a fourth gear is disposed on the output shaft 110, and the third gear meshes with the fourth gear. The third gear and the fourth gear may be helical gears.

The lawn edger also includes a main handle 710 and an auxiliary handle 720. The main handle 710 is mounted to the connection assembly 300 and used for a user to hold. The main handle 710 is disposed between the rear housing 220 and the auxiliary handle 720. Both the main handle 710 and the auxiliary handle 720 are connected to the connection tube 310. In this example, the auxiliary handle 720 extends to the upper side of the connection tube 310. During operation of an operator, the main handle 710 is held with one hand and the auxiliary handle 720 is held with the other hand, facilitating holding.

In one example, at least part of the connection tube 310 extends curvedly so that the blade 120 is away from the operator, so as to ensure operational safety. Since the connection tube 310 is bent, the connection shaft 530 in the connection tube 310 also needs to be bent. Therefore, the connection shaft 530 is configured to be a flexible shaft, where torque is transmitted through the flexible shaft, and the flexible shaft can withstand greater torque.

As shown in FIGS. 1 and 6 to 8, the connection tube 310 includes a straight tube portion 311 and a curved tube portion 312 connected to each other, the straight tube portion 311 is connected to the rear housing 220, and the curved tube portion 312 is connected to the front housing 210. Both the main handle 710 and the auxiliary handle 720 are disposed at the rear end of the connection tube 310. The setting where the straight tube portion 311 is behind the curved tube portion 312 facilitates the operation of the user at the rear end and makes the blade 120 at the front end away from the operator. Generally, the operator stands on the left side of the connection tube 310 to hold the main handle 710 and the auxiliary handle 720. Therefore, the connection tube 310 is bent towards the right side of the connection tube 310 to make the blade 120 at the front end away from the operator.

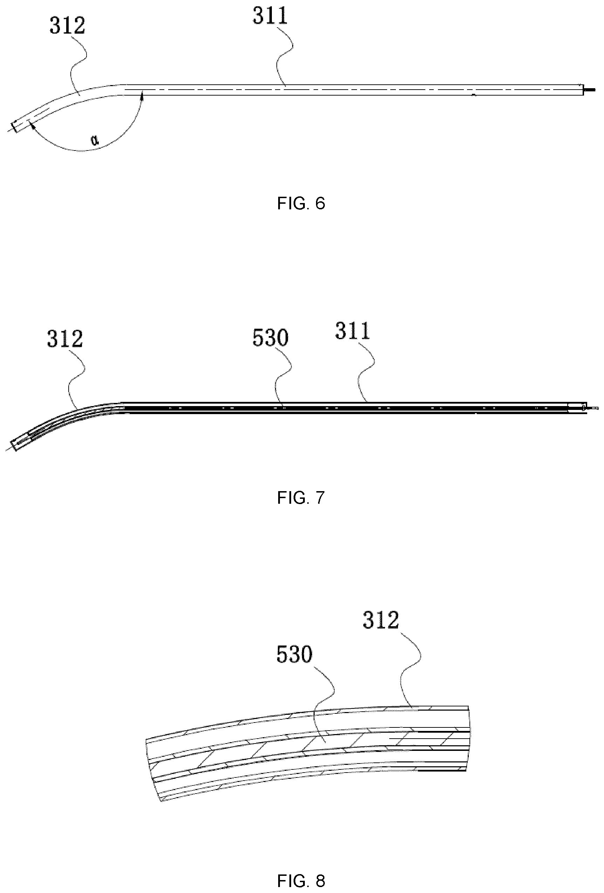

The angle at which the curved tube portion 312 is bent relative to the straight tube portion 311 is greater than or equal to 135° and less than or equal to 155°. In some examples, the angle at which the curved tube portion 312 is bent relative to the straight tube portion 311 is greater than or equal to 140° and less than or equal to 150°. In some examples, the angle at which the curved tube portion 312 is bent relative to the straight tube portion 311 is equal to 150°. Vibration and noise are reduced through gentle bending. The angle at which the curved tube portion 312 is bent relative to the straight tube portion 311 is denoted by α in FIG. 6.

The radius of curvature of the curved tube portion 312 is greater than or equal to 400 mm and less than or equal to 500 mm. In some examples, the radius of curvature of the curved tube portion 312 is greater than or equal to 420 mm and less than or equal to 480 mm. In one example, the radius of curvature of the curved tube portion 312 is 450 mm.

When the angle at which the curved tube portion 312 is bent relative to the straight tube portion 311 is equal to 150° and the radius of curvature of the curved tube portion 312 is 450 mm, use requirements are met, and noise and vibration can be effectively reduced.

Along a direction parallel to the straight tube portion 311, the length of the connection tube 310 is greater than or equal to 1400 mm. A relatively great length makes the blade 120 farther away from the operator and can achieve a wider operation range. In one example, the connection shaft 530 can withstand a torque of at least 27 N·m. The diameter of the connection shaft 530 is greater than or equal to 5 mm and less than or equal to 7 mm. In some examples, the diameter of the connection shaft 530 may be 6 mm. The length of the connection shaft 530 is greater than or equal to 1350 mm and less than or equal to 1500 mm. In some examples, the length of the connection shaft 530 is greater than or equal to 1400 mm and less than or equal to 1450 mm.

An axis of rotation of the output shaft 110 is basically perpendicular to an extension direction of the straight tube portion 311 so that the blade 120 is as far away from the operator as possible and the cutting of the blade 120 in a vertical plane is facilitated.

In some examples, the connection tube 310 may be a carbon fiber tube. A carbon fiber is an existing material. The carbon fiber tube has the advantages of high strength, a long lifetime, resistance to corrosion, a light mass, a low density, and the like so that the carbon fiber tube can not only reduce the weight but also maintain relatively high strength in a bent situation. In some other examples, the connection tube 310 includes an aluminum tube and a nylon tube, the nylon tube is inserted into the aluminum tube, and the connection shaft 530 is at least partially disposed in the nylon tube.

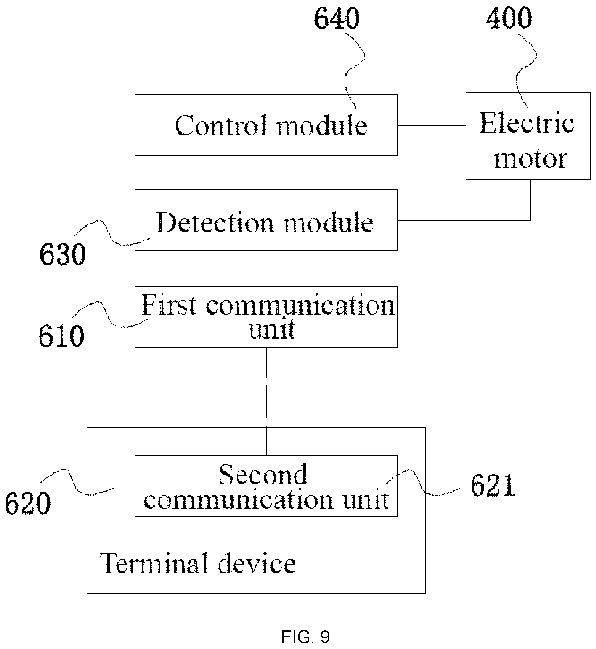

In some examples, referring to FIG. 9, the lawn edger also includes a first communication unit 610 and a terminal device 620. The first communication unit 610 is a wireless communication unit and can send information to the terminal device 620 or receive information from the terminal device 620. The terminal device 620 includes a second communication unit 621, the first communication unit 610 is connected to the second communication unit 621 by means of wireless communications, and the terminal device 620 is capable of displaying state information of the lawn edger. The terminal device 620 displays the state information of the lawn edger, making it convenient for the user to learn a working state of the lawn edger in time without being limited in position. The terminal device 620 enables the user to learn machine information on an APP, monitor the working state of the machine, and upgrade the machine. In some examples, the first communication unit 610 and the second communication unit 621 are each a Bluetooth unit. In some examples, the first communication unit 610 and the second communication unit 621 are each a Zigbee unit. In some other examples, the first communication unit 610 and the second communication unit 621 are each a Wi-Fi unit. The working principle of a wireless communication connection is the existing art, and the details are not repeated here. The terminal device 620 may be a mobile phone, a tablet, or a computer.

The lawn edger also includes a detection module 630 and a control module 640. The detection module 630 is configured to detect an operating parameter or an electrical parameter of the electric motor 400. The control module 640 is configured to determine, according to the operating parameter or the electrical parameter, whether the electric motor 400 is in a locked-rotor operating state and, when the electric motor 400 is in the locked-rotor operating state, control the electric motor 400 to stop rotating. The detection module 630 and the control module 640 collaborate to implement a brake protection function. After the blade 120 undergoes a locked rotor, the electric motor 400 can be immediately stopped in time, and the electric motor 400 is prevented from rotating with the flexible shaft, thereby avoiding a torsion of the flexible shaft.

The operating parameter may be a rotational speed, including, but not limited to, a rotational speed of the electric motor 400 and a rotational speed of the output shaft 110. When the rotational speed of the electric motor 400 is greater than or equal to a first set value and the rotational speed of the output shaft 110 is less than or equal to a second set value, the control module 640 determines that the electric motor 400 is in the locked-rotor operating state. The electrical parameter may be a current of the electric motor 400. The detection module 630 detects a present current value of the electric motor 400, and the control module 640 determines whether the present current value is greater than a preset current threshold. If so, it is determined that the electric motor 400 is in the locked-rotor operating state.

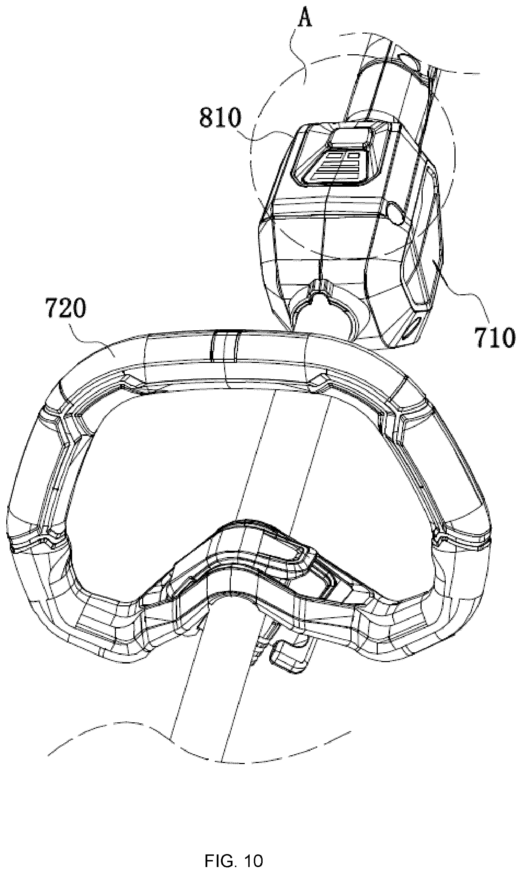

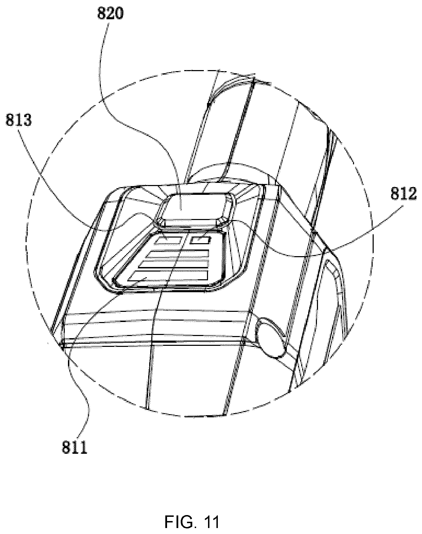

As shown in FIGS. 10 and 11, the lawn edger also includes a display assembly 810 for displaying at least speed information of operating of the lawn edger. The user can acquire current speed information visually and conveniently. Even if the speed information changes due to an accidental collision, timely treatment can be made, providing operation convenience and improving working efficiency.

The speed information may be speed information of the output shaft 110, facilitating the timely acquisition of a speed of the blade 120 by the user. The speed information may be speed information of the electric motor 400, facilitating the timely acquisition of a state of the electric motor 400 by the user. It is to be understood that the lawn edger also includes a rotational speed sensor for detecting the speed of the electric motor 400 or the output shaft 110.

In some examples, the display assembly 810 includes a display screen. Information is displayed on the display screen, facilitating visual observation. The display screen may be a touchscreen, facilitating speed regulation. In some other examples, the display assembly 810 includes a display light. Information is displayed by the display light, achieving a low fault rate. Light of different colors may represent different speed gears, for example, red represents a first gear, orange represents a second gear, and green represents a third gear. Alternatively, multiple speed display lights 811 may be disposed, and the number i of lights turned on among the multiple speed display lights 811 indicates that the lawn edger is in an i-th rotational speed gear. For example, in this example, the lawn edger has three speed gears: a low gear, an intermediate gear, and a high gear. Correspondingly, the display assembly 810 includes three speed display lights 811, one speed display light 811 on indicates that the lawn edger is in the low gear, two speed display lights 811 on indicate that the lawn edger is in the intermediate gear, and three speed display lights 811 on indicate that the lawn edger is in the high gear. For example, in the low gear, the rotational speed of the blade 120 is greater than or equal to 3800 rpm and less than or equal to 4200 rpm; in the intermediate gear, the rotational speed of the blade 120 is greater than or equal to 5300 rpm and less than or equal to 5700 rpm; and in the high gear, the rotational speed of the blade 120 is greater than or equal to 6800 rpm and less than or equal to 7200 rpm.

In some examples, the speed information includes a speed gear or a speed value. The speed gears may be divided into the low gear, the intermediate gear, or the high gear.

In some examples, the display assembly 810 can display the remaining power of the battery pack 600, facilitating timely charging. For example, the display assembly 810 includes a power display light 812. Different colors of the power display light 812 represent different power levels. For example, red represents very little power, orange represents little power, and green represents sufficient power.

In some examples, the display assembly 810 can display the present efficiency or current or torque.

The display assembly 810 includes a display interface capable of displaying the speed information. For example, in this example, the three speed display lights 811 may be considered as the display interface. Of course, the display interface may also be considered as including the power display light 812 and the following Bluetooth display light 813. A speed regulator 820 is disposed on a side of the display interface, and the speed regulator 820 is disposed relatively near the display interface, facilitating the simultaneous speed regulation and observation. Specifically, the distance between the speed regulator 820 and the display interface is less than or equal to 10 cm. The speed regulator 820 may be a speed regulation button that is pressed for speed regulation. The speed may be changed once every press, or the speed may be switched through presses of different durations. For example, in this example, the speed regulator 820 may be operated to switch the lawn edger between the low gear, the intermediate gear, and the high gear in turn.

The display assembly 810 is disposed on a housing of the main handle 710. The housing of the main handle 710 is sleeved on the connection tube 310, the display assembly 810 is disposed on the upper side of the housing of the main handle 710, and the speed regulator 820 and the display assembly 810 are disposed on the same side of the main handle 710, facilitating the simultaneous speed regulation and observation. Specifically, the speed regulator 820 is disposed at the rear end of the display interface, and the display interface is not blocked when the speed regulator 820 is operated.

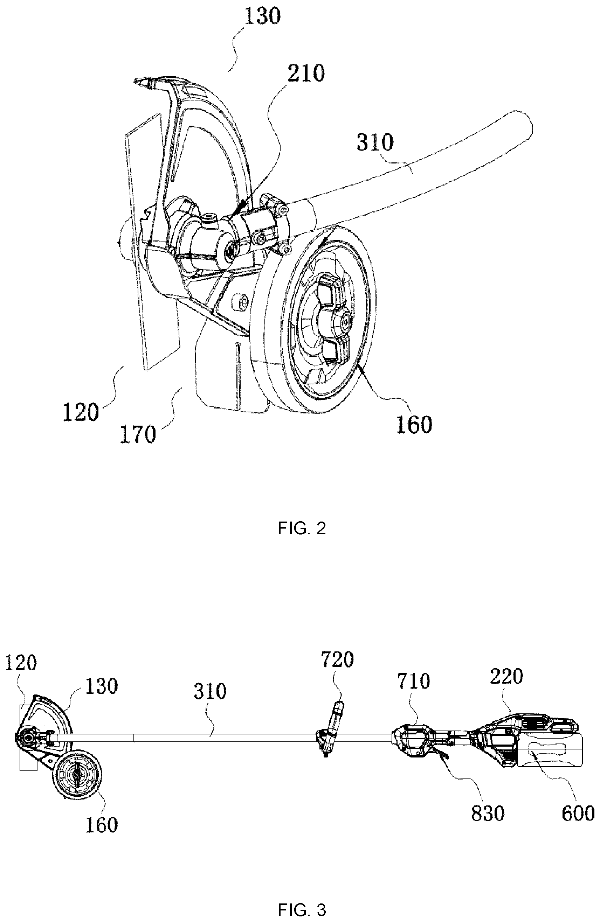

Referring to FIG. 3, a trigger 830 is further disposed on the housing of the main handle 710, and the trigger 830 and the display assembly 810 are disposed on two opposite sides of the main handle 710. The trigger 830 is disposed on the lower side of the housing of the main handle 710 and at the rear end of the main handle 710. Generally, the main handle 710 is held with the right hand, the speed regulator 820 can be operated with a thumb of the right hand, and the trigger 830 can be operated with the remaining four fingers of the right hand. The speed regulator 820 and the trigger 830 are operated with a single hand.

The display assembly 810 also includes a display portion for displaying a connection state of the first communication unit 610. For example, the display portion includes the Bluetooth display light 813. When the Bluetooth display light 813 flickers, the first communication unit 610 is in a to-be-connected state. When the Bluetooth display light 813 is constantly on, the first communication unit 610 is in a connected state. The first communication unit 610 may be the Bluetooth unit or the Wi-Fi unit. The first communication unit 610 is configured to send information to the terminal device 620 or receive information from the terminal device 620.

Referring to FIGS. 1, 2, and 12, the lawn edger also includes a shield 130 surrounding at least part of the blade 120. The shield 130 can not only prevent the blade 120 from injuring the operator but also prevent the grass from splashing.

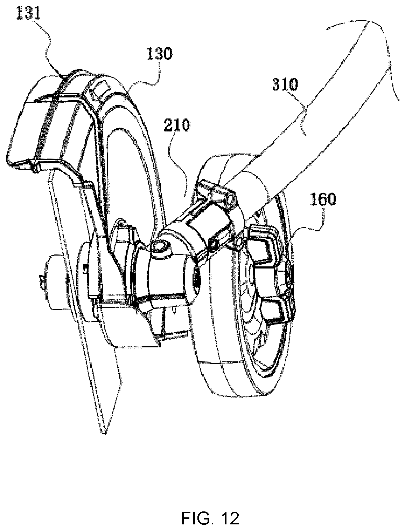

Referring to FIG. 12, the blade 120 rotates about an axis of rotation in a cutting plane, a guide protrusion 131 is circumferentially disposed on an outer peripheral surface of the shield 130, and the guide protrusion 131 is in the cutting plane. The guide protrusion 131 is disposed in the cutting plane, making it convenient for the user to align the blade according to the guide protrusion 131 on the shield 130, so that the user can align an edge of a road more clearly, and a cost and the weight can be reduced.

In an existing lawn edger, during the detachment and installation of the blade 120, a gearbox needs to be clamped with a relatively large force, causing a crack of the gearbox.

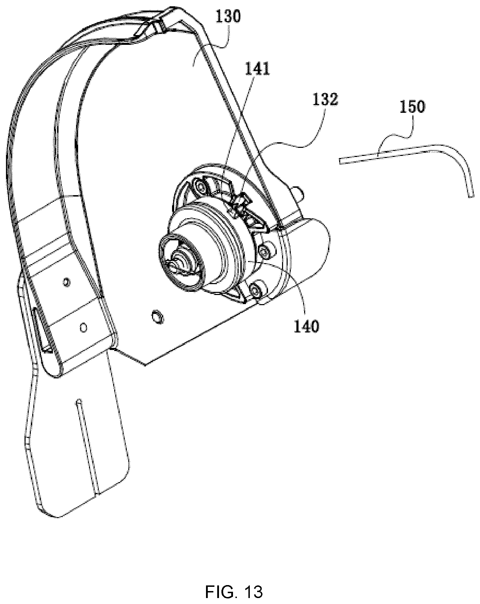

Referring to FIG. 13, a flange 140 is disposed on the output shaft 110, the flange 140 is provided with a notch 141, the shield 130 is provided with a shield hole 132, and the shield hole 132 communicates with the notch 141. During the detachment of the blade 120, an end of a tool 150 passes through the shield hole 132 and is inserted into the notch 141 to fix the output shaft 110 so that the blade 120 can be conveniently detached. The tool 150 is clamped on the shield 130 rather than the gearbox, avoiding damage to the gearbox and protecting the gearbox from the crack.

Specifically, a limiting rib is disposed on the shield 130, and the shield hole 132 is opened on the limiting rib, or the limiting rib surrounds the shield hole 132. The tool 150 may use an existing wrench.

Referring to FIGS. 1, 2, 12, and 13, the lawn edger also includes a support assembly including a walking wheel 160 for supporting the lawn edger on the ground. Specifically, the walking wheel 160 is rotatably disposed on the shield 130. The walking wheel 160 supports the lawn edger. During use, the walking wheel 160 may be placed on the ground, and the lawn edger is pushed forward to implement cutting, thereby saving manpower.

The support assembly also includes a support plate 170 disposed on a side of the shield 130. When the lawn edger is placed on the ground, the support plate 170 supports the lawn edger to prevent the lawn edger from turning to one side.

When the electric motor 400 is in a maximum-efficiency state, the ratio of output power of the electric motor 400 to the weight of the lawn edger is greater than or equal to 180 W/kg, which indicates that the electric motor 400 has relatively large output power, a relatively small mass, and a relatively high power density so that machine performance is improved and the whole machine is kept in a relatively light state, thereby facilitating user operation. In some examples, when the electric motor 400 is in the maximum-efficiency state, the ratio of the output power of the electric motor 400 to the weight of the lawn edger is greater than or equal to 200 W/kg. In some examples, when the electric motor 400 is in the maximum-efficiency state, the ratio of the output power of the electric motor 400 to the weight of the lawn edger is greater than or equal to 250 W/kg. In some examples, when the electric motor 400 is in the maximum-efficiency state, the ratio of the output power of the electric motor 400 to the weight of the lawn edger may be 200 W/kg, 220 W/kg, 240 W/kg, 250 W/kg, 260 W/kg, or 280 W/kg.

The output power of the electric motor 400 is greater than or equal to 1000 W. In some examples, the output power of the electric motor 400 is greater than or equal to 1200 W. In some examples, the output power of the electric motor 400 is greater than or equal to 1400 W. In some examples, the output power of the electric motor 400 is 1000 W, 1100 W, 1200 W, 1300 W, 1400 W, or 1500 W.

The nominal voltage of the battery pack 600 is greater than or equal to 40 V, improving the machine performance and achieving suitability for more working conditions such as cutting harder stones. In some examples, the nominal voltage of the battery pack 600 is greater than or equal to 56 V. In some examples, the nominal voltage of the battery pack 600 is greater than or equal to 80 V.

As for the output power of the electric motor 400 when the electric motor 400 is in the maximum-efficiency state, a characteristic graph of the electric motor 400 is obtained through measurement, a maximum-efficiency point of the electric motor 400 is found from the characteristic graph, and output power corresponding to the maximum-efficiency point is the output power of the electric motor 400 in the maximum-efficiency state.

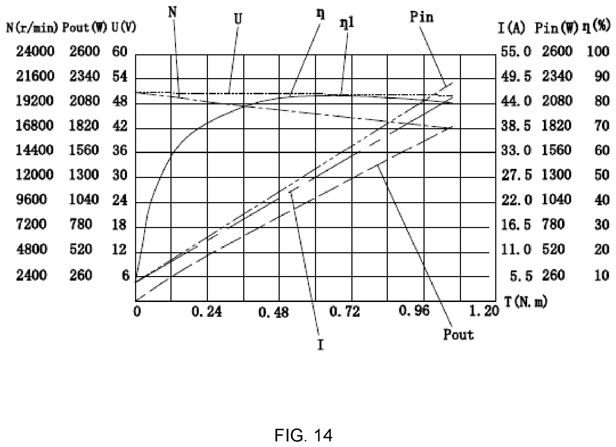

FIG. 14 is the characteristic graph of the electric motor 400, and multiple curves are shown by using different lines in the figure, where the abscissa of each curve represents torque denoted as T and having a unit of N·m, and the ordinates of the curves are different. For ease of distinguishing, different lines and letters are used for representing the curves. The curves specifically represent the rotational speed denoted as N and having a unit of r/min, the output power denoted as Pout and having a unit of W, input power denoted as Pin and having a unit of W, a voltage denoted as U and having a unit of V, a current denoted as I and having a unit of A, and an efficiency percentage denoted as η. In the figure, η1 represents the maximum-efficiency point. In this example, efficiency at the maximum-efficiency point is 83.8%, and the corresponding output power is 1284.48 W.

The weight of the lawn edger is less than or equal to 5.5 kg. In some examples, the weight of the lawn edger is less than or equal to 5 kg. In some examples, the weight of the lawn edger is less than or equal to 4.8 kg. In some examples, the weight of the lawn edger may be 5.5 kg, 5.0 kg, 4.8 kg, 4.5 kg, 3.5 kg, or 3.0 kg.

The weight of the lawn edger refers to the weight of a main part of the lawn edger excluding the battery pack 600 but including the blade 120 and the auxiliary handle 720.

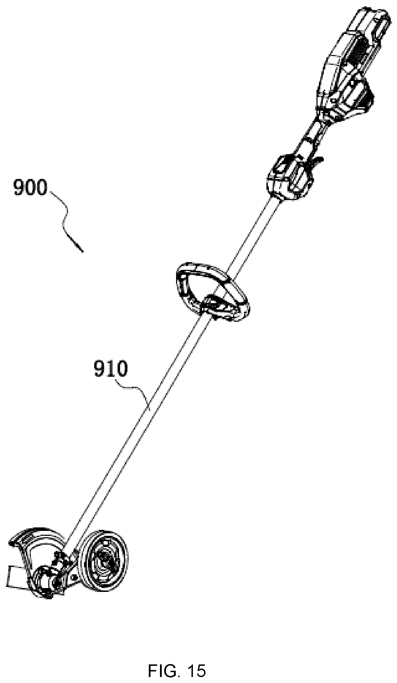

In another example, as shown in FIG. 15, another lawn edger 900 has substantially the same structure as the lawn edger in FIG. 1, which mainly differ in that a connection tube 910 extends along a straight line. Structures of the lawn edger in FIG. 1, which are applicable to the lawn edger 900 in FIG. 14, may all be applied to the lawn edger 900. The details are not repeated here.

The basic principles, main features, and advantages of this application are shown and described above. It is to be understood by those skilled in the art that the aforementioned examples do not limit the present application in any form, being the scope of the invention defined by the claims.

## Claims

1. A lawn edger (100, 900), comprising:
an output shaft (110) for mounting a blade (120) for cutting grass;
a shield (130) surrounding at least part of the blade;
a front housing (210) accommodating at least part of the output shaft;
a rear housing (220) formed with a coupling portion (221) for coupling a battery pack (600);
an electric motor (400) mounted in the rear housing to drive the output shaft;
a connection assembly (300) for connecting the front housing to the rear housing; and
a transmission assembly (500) for transmitting power between the electric motor and the output shaft; **characterized in that**
the lawn edger (100, 900) comprises a support assembly including a walking wheel (160) rotatably disposed on the shield (130) and supporting the lawn edger (100, 900) during use; and
when the electric motor is in a maximum-efficiency state, a ratio of output power of the electric motor to a weight of the lawn edger is greater than or equal to 180 W/kg.

2. The lawn edger of claim 1, wherein when the electric motor is in the maximum-efficiency state, the ratio of the output power of the electric motor to the weight of the lawn edger is greater than or equal to 200 W/kg.

3. The lawn edger of claim 2, wherein the output power of the electric motor is greater than or equal to 1200 W.

4. The lawn edger of claim 1, wherein the weight of the lawn edger is less than or equal to 5.5 kg.

5. The lawn edger of claim 1, wherein the connection assembly comprises a connection tube (310) for connecting the front housing to the rear housing, and at least part of the connection tube extends curvedly.

6. The lawn edger of claim 5, wherein the transmission assembly comprises:
a first drive shaft (510) connected to the electric motor and disposed at a rear end of the connection tube;
a second drive shaft (520) for driving the output shaft; and
a connection shaft (530) for connecting the first drive shaft to the second drive shaft, wherein at least part of the connection shaft is disposed in the connection tube, and the connection shaft is flexible.

7. The lawn edger of claim 5, wherein the connection tube comprises a straight tube portion (311) and a curved tube portion (312) connected to each other, the straight tube portion is connected to the rear housing, the curved tube portion is connected to the front housing, and an angle at which the curved tube portion is bent relative to the straight tube portion is greater than or equal to 135° and less than or equal to 155°.

8. The lawn edger of claim 1, further comprising:
a first communication unit (610); and
a terminal device (620) comprising a second communication unit (621), wherein the first communication unit is connected to the second communication unit by wireless communications, and the terminal device is capable of displaying state information of the lawn edger.

9. The lawn edger of claim 8, wherein the first communication unit and the second communication unit are each a Bluetooth unit.

10. The lawn edger of claim 1, further comprising:
a detection module (630) configured to detect an operating parameter or an electrical parameter of the electric motor; and
a control module (640) configured to determine, according to the operating parameter or the electrical parameter, whether the electric motor is in a locked-rotor operating state and, when the electric motor is in the locked-rotor operating state, control the electric motor to stop rotating.

11. The lawn edger of claim 1, wherein the connection assembly comprises a connection tube (310), the connection tube comprises a straight tube portion (311) and a curved tube portion (312) connected to each other, the straight tube portion is connected to the rear housing, the curved tube portion is connected to the front housing, and an axis of rotation of the output shaft is basically perpendicular to an extension direction of the straight tube portion.

12. The lawn edger of claim 1, wherein the connection assembly comprises a connection tube (310) which is a carbon fiber tube.

13. The lawn edger of claim 1, further comprising:
a main handle (710) mounted to the connection assembly and used for a user to hold; and
a display assembly (810) for displaying at least speed information of operating of the lawn edger.

14. The lawn edger of claim 13, wherein the display assembly comprises a display screen.

15. The lawn edger of claim 13, wherein the display assembly is disposed on a housing of the main handle.

## Patentansprüche

1. Rasenkantenschneider (100, 900), umfassend:
eine Abtriebswelle (110) zur Montage eines Schneidmessers (120) zum Schneiden von Gras;
einen Schutzschild (130), der zumindest einen Teil des Schneidmessers umgibt;
ein vorderes Gehäuse (210), das zumindest einen Teil der Abtriebswelle aufnimmt;
ein hinteres Gehäuse (220), das mit einem Kupplungsabschnitt (221) zum Ankoppeln eines Batteriepacks (600) ausgebildet ist;
einen Elektromotor (400), der im hinteren Gehäuse montiert ist, um die Abtriebswelle anzutreiben;
eine Verbindungseinheit (300) zum Verbinden des vorderen Gehäuses mit dem hinteren Gehäuse; und
eine Übertragungseinheit (500) zur Übertragung der Leistung zwischen dem Elektromotor und der Abtriebswelle; **dadurch gekennzeichnet, dass**
der Rasenkantenschneider (100, 900) eine Trageinheit umfasst, die ein Laufrad (160) einschließt, das drehbar am Schutzschild (130) angeordnet ist und den Rasenkantenschneider (100, 900) während des Gebrauchs trägt; und
wenn sich der Elektromotor im Wirkungsgradmaximum befindet, ein Verhältnis der Ausgangsleistung des Elektromotors zum Gewicht des Rasenkantenschneiders größer oder gleich 180 W/kg ist.

2. Rasenkantenschneider nach Anspruch 1, wobei, wenn sich der Elektromotor im Wirkungsgradmaximum befindet, das Verhältnis der Ausgangsleistung des Elektromotors zum Gewicht des Rasenkantenschneiders größer oder gleich 200 W/kg ist.

3. Rasenkantenschneider nach Anspruch 2, wobei die Ausgangsleistung des Elektromotors größer oder gleich 1200 W ist.

4. Rasenkantenschneider nach Anspruch 1, wobei das Gewicht des Rasenkantenschneiders kleiner oder gleich 5,5 kg ist.

5. Rasenkantenschneider nach Anspruch 1, wobei die Verbindungseinheit ein Verbindungsrohr (310) zum Verbinden des vorderen Gehäuses mit dem hinteren Gehäuse umfasst, und wobei zumindest ein Teil des Verbindungsrohrs gekrümmt verläuft.

6. Rasenkantenschneider nach Anspruch 5, wobei die Übertragungseinheit Folgendes umfasst:
eine erste Antriebswelle (510), die mit dem Elektromotor verbunden ist und an einem hinteren Ende des Verbindungsrohrs angeordnet ist;
eine zweite Antriebswelle (520) zum Antreiben der Abtriebswelle; und
eine Verbindungswelle (530) zum Verbinden der ersten Antriebswelle mit der zweiten Antriebswelle, wobei zumindest ein Teil der Verbindungswelle im Verbindungsrohr angeordnet ist, und wobei die Verbindungswelle flexibel ist.

7. Rasenkantenschneider nach Anspruch 5, wobei das Verbindungsrohr einen geraden Rohrabschnitt (311) und einen gekrümmten Rohrabschnitt (312) umfasst, die miteinander verbunden sind, wobei der gerade Rohrabschnitt mit dem hinteren Gehäuse verbunden ist, der gekrümmte Rohrabschnitt mit dem vorderen Gehäuse verbunden ist, und wobei ein Winkel, unter dem der gekrümmte Rohrabschnitt relativ zum geraden Rohrabschnitt gebogen ist, größer oder gleich 135° und kleiner oder gleich 155° ist.

8. Rasenkantenschneider nach Anspruch 1, ferner umfassend:
eine erste Kommunikationseinheit (610); und
ein Endgerät (620), das eine zweite Kommunikationseinheit (621) umfasst, wobei die erste Kommunikationseinheit über drahtlose Kommunikation mit der zweiten Kommunikationseinheit verbunden ist, und wobei das Endgerät in der Lage ist, Statusinformationen des Rasenkantenschneiders anzuzeigen.

9. Rasenkantenschneider nach Anspruch 8, wobei sowohl die erste Kommunikationseinheit als auch die zweite Kommunikationseinheit jeweils eine Bluetooth-Einheit sind.

10. Rasenkantenschneider nach Anspruch 1, ferner umfassend:
ein Detektionsmodul (630), das dazu eingerichtet ist, einen Betriebsparameter oder einen elektrischen Parameter des Elektromotors zu erfassen; und
ein Steuerungsmodul (640), das dazu eingerichtet ist, basierend auf dem Betriebsparameter oder dem elektrischen Parameter zu bestimmen, ob sich der Elektromotor in einem Betriebszustand bei blockiertem Rotor befindet, und wenn sich der Elektromotor in einem Betriebszustand bei blockiertem Rotor befindet, den Elektromotor anzuhalten.

11. Rasenkantenschneider nach Anspruch 1, wobei die Verbindungseinheit ein Verbindungsrohr (310) umfasst, wobei das Verbindungsrohr einen geraden Rohrabschnitt (311) und einen gekrümmten Rohrabschnitt (312) umfasst, die miteinander verbunden sind, wobei der gerade Rohrabschnitt mit dem hinteren Gehäuse verbunden ist, der gekrümmte Rohrabschnitt mit dem vorderen Gehäuse verbunden ist, und wobei eine Drehachse der Abtriebswelle im Wesentlichen senkrecht zur Verlaufsrichtung des geraden Rohrabschnitts verläuft.

12. Rasenkantenschneider nach Anspruch 1, wobei die Verbindungseinheit ein Verbindungsrohr (310) umfasst, das ein Kohlefaserrohr ist.

13. Rasenkantenschneider nach Anspruch 1, ferner umfassend:
einen Hauptgriff (710), der an der Verbindungseinheit montiert ist und zum Halten durch einen Benutzer dient; und
eine Anzeigeeinheit (810) zum Anzeigen von mindestens Geschwindigkeitsinformationen des Betriebs des Rasenkantenschneiders.

14. Rasenkantenschneider nach Anspruch 13, wobei die Anzeigeeinheit einen Bildschirm umfasst.

15. Rasenkantenschneider nach Anspruch 13, wobei die Anzeigeeinheit an einem Gehäuse des Hauptgriffs angeordnet ist.

## Revendications

1. Un dresse-bordures (100, 900), comprenant :
un arbre de sortie (110) destiné à monter une lame (120) pour couper de l'herbe ;
un carter (130) entourant au moins une partie de la lame ;
un boîtier avant (210) accueillant au moins une partie de l'arbre de sortie ;
un boîtier arrière (220) formé avec une partie de couplage (221) pour coupler un bloc batterie (600) ;
un moteur électrique (400) monté dans le boîtier arrière pour entraîner l'arbre de sortie ;
un ensemble de liaison (300) pour relier le boîtier avant au boîtier arrière ; et
un ensemble de transmission (500) pour transmettre la puissance entre le moteur électrique et l'arbre de sortie ;
**caractérisé en ce que**
le dresse-bordures (100, 900) comprend un ensemble de support incluant une roue de guidage (160) disposée en rotation sur le carter (130) et supportant le dresse-bordures (100, 900) pendant l'utilisation ; et
lorsque le moteur électrique fonctionne à son rendement maximal, un rapport entre la puissance de sortie du moteur électrique et le poids du dresse-bordures est supérieur ou égal à 180 W/kg.

2. Le dresse-bordures selon la revendication 1, dans lequel, lorsque le moteur électrique fonctionne à son rendement maximal, le rapport entre la puissance de sortie du moteur électrique et le poids du dresse-bordures est supérieur ou égal à 200 W/kg.

3. Le dresse-bordures selon la revendication 2, dans lequel la puissance de sortie du moteur électrique est supérieure ou égale à 1200 W.

4. Le dresse-bordures selon la revendication 1, dans lequel le poids du dresse-bordures est inférieur ou égal à 5,5 kg.

5. Le dresse-bordures selon la revendication 1, dans lequel l'ensemble de liaison comprend un tube de liaison (310) destiné à relier le boîtier avant au boîtier arrière, et dans lequel au moins une partie du tube de liaison est courbée.

6. Le dresse-bordures selon la revendication 5, dans lequel l'ensemble de transmission comprend :
un premier arbre d'entraînement (510) connecté au moteur électrique et disposé à une extrémité arrière du tube de liaison ;
un second arbre d'entraînement (520) pour entraîner l'arbre de sortie ; et
un arbre de connexion (530) pour connecter le premier arbre d'entraînement au second arbre d'entraînement, au moins une partie de l'arbre de connexion étant disposée dans le tube de liaison, et l'arbre de connexion étant flexible.

7. Le dresse-bordures selon la revendication 5, dans lequel le tube de liaison comprend une portion droite (311) et une portion courbe (312) connectées entre elles, la portion droite étant connectée au boîtier arrière, la portion courbe étant connectée au boîtier avant, et un angle de courbure de la portion courbe par rapport à la portion droite étant supérieur ou égal à 135° et inférieur ou égal à 155°.

8. Le dresse-bordures selon la revendication 1, comprenant en outre :
une première unité de communication (610) ; et
un dispositif terminal (620) comprenant une seconde unité de communication (621), la première unité de communication étant connectée à la seconde unité de communication par communication sans fil, et le dispositif terminal étant capable d'afficher des informations d'état du dresse-bordures.

9. Le dresse-bordures selon la revendication 8, dans lequel la première unité de communication et la seconde unité de communication sont chacune une unité Bluetooth.

10. Le dresse-bordures selon la revendication 1, comprenant en outre :
un module de détection (630) configuré pour détecter un paramètre de fonctionnement ou un paramètre électrique du moteur électrique ; et
un module de commande (640) configuré pour déterminer, sur la base du paramètre de fonctionnement ou du paramètre électrique, si le moteur électrique est en état de rotor bloqué, et, lorsque tel est le cas, commander l'arrêt de rotation du moteur électrique.

11. Le dresse-bordures selon la revendication 1, dans lequel l'ensemble de liaison comprend un tube de liaison (310), ledit tube comprenant une portion droite (311) et une portion courbe (312) connectées entre elles, la portion droite étant connectée au boîtier arrière, la portion courbe étant connectée au boîtier avant, et un axe de rotation de l'arbre de sortie étant sensiblement perpendiculaire à la direction d'extension de la portion droite.

12. Le dresse-bordures selon la revendication 1, dans lequel l'ensemble de liaison comprend un tube de liaison (310), ledit tube étant un tube en fibre de carbone.

13. Le dresse-bordures selon la revendication 1, comprenant en outre :
une poignée principale (710) montée sur l'ensemble de liaison et destinée à être tenue par un utilisateur ; et
un ensemble d'affichage (810) pour afficher au moins des informations de vitesse de fonctionnement du dresse-bordures.

14. Le dresse-bordures selon la revendication 13, dans lequel l'ensemble d'affichage comprend un écran d'affichage.

15. Le dresse-bordures selon la revendication 13, dans lequel l'ensemble d'affichage est disposé sur un boîtier de la poignée principale.
